# EUROPEAN PATENT SPECIFICATION

(11) **EP 0 517 144 B1**
(45) Date of publication and mention of the grant of the patent: **17.09.1997**
(21) Application number: 92109220.1
(22) Date of filing: 01.06.1992
(51) Int. Cl.: G02B 6/44

(54) **Optical cable**
Optisches Kabel
Câble optique

(30) Priority: 03.06.1991 JP 130212/91
(43) Date of publication of application: 09.12.1992
(73) Proprietor: SUMITOMO ELECTRIC INDUSTRIES, LIMITED, Osaka 541 (JP)
(72) Inventor: Katurashima, Wataru, c/o Yokohama Works of, Sakae-ku, Yokohama-shi, Kanagawa (JP); Kitayama, Yoshinobu, c/o Yokohama Works of, Sakae-ku, Yokohama-shi, Kanagawa (JP); Sano, Hiroaki, c/o Yokohama Works of, Sakae-ku, Yokohama-shi, Kanagawa (JP); Ishikawa, Hiroki, c/o Yokohama Works of, Sakae-ku, Yokohama-shi, Kanagawa (JP); Tanaka, Shigeru, c/o Yokohama Works of, Sakae-ku, Yokohama-shi, Kanagawa (JP)
(74) Representative: Grünecker, Kinkeldey, Stockmair & Schwanhäusser Anwaltssozietät

(56) References cited:
- EP-A- 0 216 548
- EP-A- 0 280 279
- EP-A- 0 349 206
- FR-A- 2 534 385
- PATENT ABSTRACTS OF JAPAN vol. 13, no. 30 (P-816)24 January 1989 & JP-A-63 228 114

## Description

### BACKGROUND OF THE INVENTION

The present invention relates to a structure of a multifiber high-density cable which has a good transmission characteristic and which is relatively inexpensive.

As a multifiber high-density optical cable which is being put in practice at present, the tape slot type optical cable of Japan (Japanese Utility Model Unexamined Publication No. Sho-58-188613) is an optical cable which has the largest number of optical fibers. In such a tape slot type optical cable, the number of optical fibers reaches 1000 at largest, and the packing density of coated optical fibers per unit area is about 0.8 coated optical fibers per mm².

Further, since a groove for accommodating a tape type optical unit therein has an opening portion, the tape slot type optical cable is superior in workability for taking out the tape type optical unit. Particularly in an optical cable for which a waterproof property is required, the waterproof property can be simply provided by using water-absorbing press-winding tape, as stated in "Characteristic of Simple-Waterproof Optical Fiber" (1988 Autumn Meeting of the Institute of Electronics, Information and Communication Engineers of Japan, B-376).

Further, a tape tube type optical cable, that is, a high- fiber-count optical cable of AT & T Corporation in the United States (International Wire & Cable Symposium Proceedings 1982, p.396) has an optical-fiber packing density of about 1.3 coated optical fibers per mm². The tape tube type optical cable is one of the multifiber optical cables which are the most superior in high-density property.

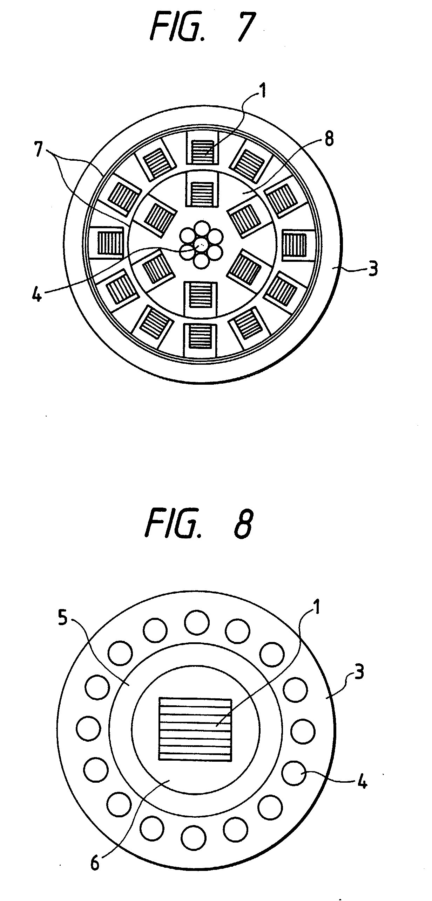

However, since the tape type optical units are accommodated in a tube as shown in Fig. 8, the tape tube type optical cable has a problem in workability in taking out the tape type optical units. Further, there is another problem in that it is necessary to seal a gel-like waterproofing admixture into the tube in order to make the waterproof property sufficient and therefore the workability in connection of the optical cable is lowered.

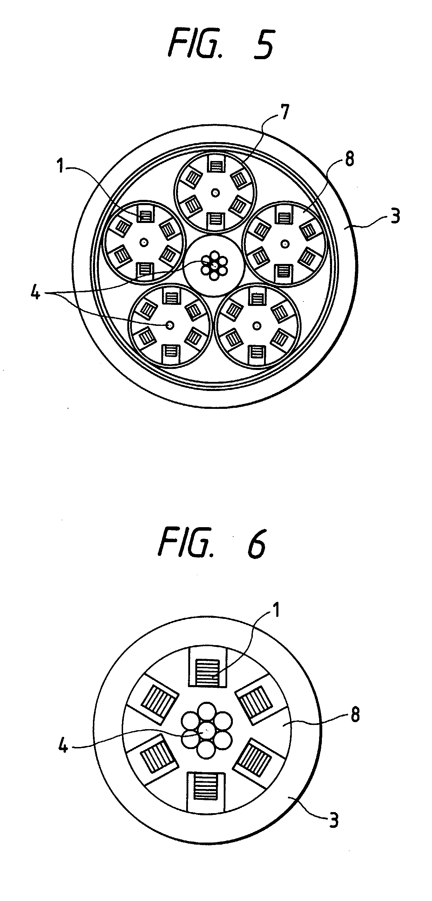

In the tape slot type optical cable, being accommodated in the grooves formed in an outer circumference of a slotted rod as shown in Figs. 5 and 6, the tape type optical units are pressed against the respective groove bottoms and subjected to side pres sure by the force which acts toward the center of the slotted rod.

Further, in a case of the tape slot type optical cable having not less than 500 or not less than 1000 coated optical fibers, the volume of the central portion of the slotted rod is useless to thereby lower the efficiency of accommodation. As an improvement of the efficiency of accommodation, such a multi- layer structure as shown in Fig. 7 may be considered. In such a structure, however, the workability in taking out the tape-type optical units in a central layer is extremely lowered.

Document EP-A-0 280 279 discloses a tape and slot type optical cable having a core with a plurality of spiral-shaped grooves. Thereby, the groove dimensions are defined in relationship to the dimension of the optical fiber tape for an improvement of the transmission and mechanical strength characteristics of the optical cable.

The optical fiber cable described in JP-A-63-228 114 consists of a cable body with a straight groove which accommodates an optical fiber unit. Furthermore, the body includes tension members which are adapted for shifting the neutral plane of bending in an off-centered position. The dimensions of the groove are selected so as to position the optical fiber unit into the neutral plane of bending.

An aerial optical fiber cable with a straight slotted core member accommodating an optical fiber unit is described in document EP-A-0 216 548. The slot of the core member can be provided with a substantially rectangular cross-section being adapted to the shape of the accommodated optical fiber tape.

The object of the present invention is to provide an improved optical cable comprising at least one multi-fiber optical unit wherein the optical cable represents a design concept which allows a reduction of side pressures applied to the optical unit and an improved saving in space.

This object is solved by an optical cable with the features of claim 1. Advantageous embodiments of the optical cable are defined in the dependent claims.

It is an in particular object of the present invention to provide an optical cable in which the above problems are solved, in which tape type optical units hardly receive side pressure in respective grooves, in which taking-out workability is not lowered, and in which the efficiency of accommodation is good even if the number of coated optical fibers are made large.

According to an embodiment of the present invention, the optical cable uses multifiber optical units, each of the multifiber optical units having a lamination body of a tape-type optical unit accommodated in a groove formed in a rod-like member, the tape-type optical unit being constituted by a plurality of optical fibers arranged in one row and coated collectively, wherein the distance between the center of the rod-like member and a bottom portion of the groove is made to be equal to or larger than a half of the height of the lamination body.

The multifiber optical units may be twisted in one direction or twisted in a condition so as to be reversed alternately in opposite directions. In the optical cable, strength members may be provided on an outside portion of each of the multifiber optical units.

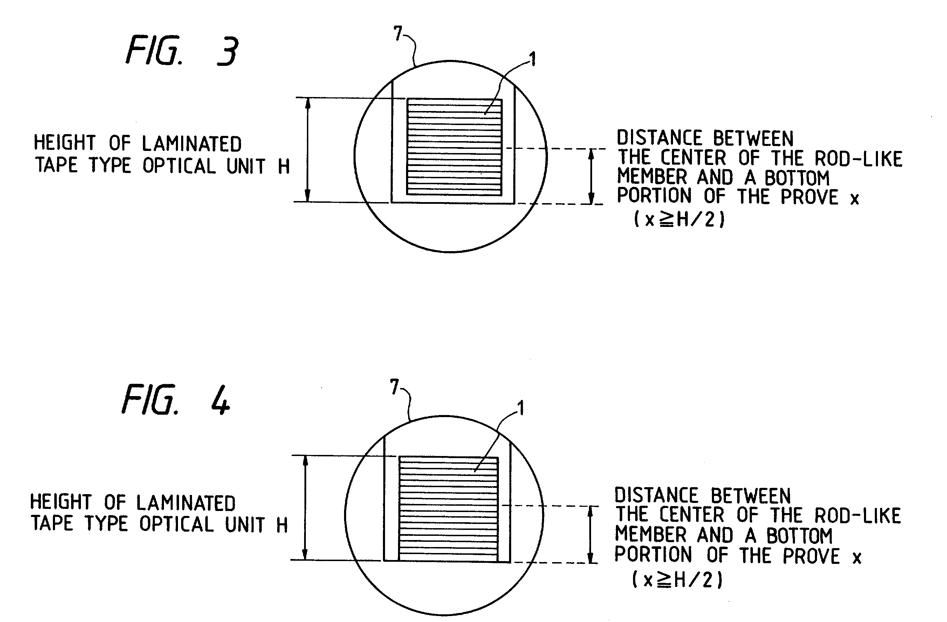

In the optical cable according to an embodiment of the present invention, since the groove is formed in the circular rod-like member so as to reach the central portion as shown in Fig. 3, the efficiency of accommodating optical fibers in the multifiber high-density optical cable having coated optical fibers not less than 500 or not less than 1000 is improved, and the diameter of the cable can be made smaller than that of the tape slot type optical cable.

Further, unlike the tape slot type optical cable, the tape type optical unit is arranged substantially at the center of the multifiber optical unit so that the tape type optical unit is hardly pressed against the groove bottom in the normal state. Although the tape type optical unit may be sometimes pressed against the groove bottom in a momentary condition, fine bending of the optical fibers due to side pressure can be much reduced even in such a case.

### BRIEF DESCRIPTION OF THE DRAWINGS

Fig. 1 is a section of the optical cable which is an embodiment of the present invention.

Fig. 2 is a section of the optical cable which is another embodiment of the present invention.

Fig. 3 is a section of an embodiment of the multifiber optical unit to be used in the optical cable according to the present invention.

Fig. 4 is a section of another embodiment of the multifiber optical unit to be used in the optical cable according to the present invention.

Fig. 5 is a section of an example of a conventional tape slot type optical cable.

Fig. 6 is a section of another example of a conventional tape slot type optical cable.

Fig. 7 is a section of an example of a multi-layer structure tape slot type optical cable.

Fig. 8 is a section of an example of a conventional tape tube type optical cable.

### DETAILED DESCRIPTION OF THE PREFERRED EMBODIMENTS

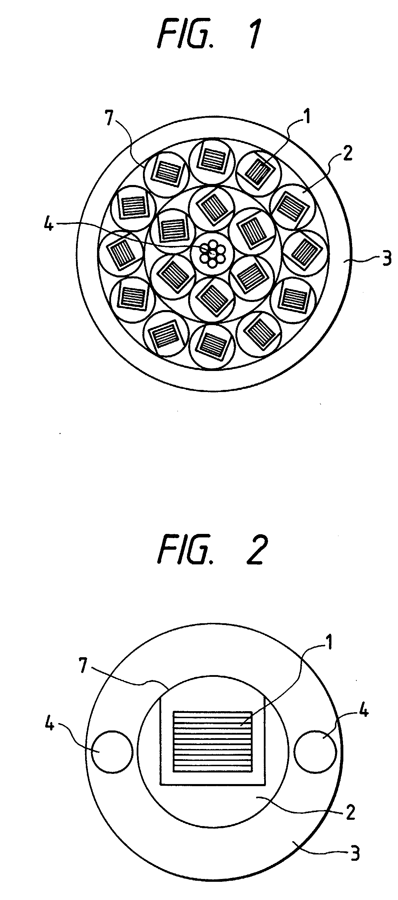

In the optical cable shown in Fig. 1 as an embodiment of the present invention, multifiber optical units 1 were layer-twisted in one direction around a central tension body 4, further multi fiber optical units 1 were layer-twisted in one direction on the outside of the first-mentioned twisted multifiber units 1, and then a sheath was applied thereto.

In the optical cable shown in Fig. 2 as another embodiment of the present invention, a multifiber optical unit was arranged in the center of the optical cable, a sheath 2 was applied to the outside of the multifiber optical unit, and two strength members 4 were arranged in the sheath 2 so as to be in opposition to each other.

In each of the multifiber optical units shown in Figs. 3 and 4, a circular rod-like member 2 is made of high-density polyethylene and has a twisted rectangular groove. The material to be used for the circular rod-like member 2 may be plastic such as polypropylene or the like which is superior in extrusion molding property or may be metal such as aluminum which is superior in working property.

In order to improve the accommodation density of optical fibers, each coated optical fiber to be used has a fine outer diameter of 200 µm.

In the tape type optical unit 1 to be accommodated, 16 coated optical fibers are aligned so as to be a tape-like arrangement and 14 tape-like arrangements are laminated one on one into a lamination body, and the lamination body is inserted into the rectangular groove of the circular rod-like member. After accommodated into the groove, the tape type optical unit 1 is held in the groove by means of press-winding tape 7.

The relation between the depth of the groove and the height of the lamination body is selected so that the center of the laminated tape type optical unit substantially agrees with the center of the circular rod-like member so that the tape type optical unit is not subjected to side pressure. Further, the distance between the center of the rod-like member and a bottom portion of said groove is made to be equal to or larger than a half of the height of the lamination body. Further more, the groove is formed in the circular rod-like member so as to reach the central portion as shown in Fig. 3.

Ordinary, the press-winding tape 7 may be plastic tape. Particularly in the case where there is no problem in waterproof property, plastic may be directly extruded pipe-like so as to cover the tape type optical unit. In the case where the water proof becomes a problem, each coated optical fiber per se may be made superior in waterproof property, or a material having water- absorbing property may be used for the press-winding tape.

Further, making the shape of the optical fiber accommodating portion formed in the circular rod-like member substantially rectangular brings an effect of suppressing the disorder of the arrangement of the tape type optical units and a further effect of improving the waterproof property because no excessive space is purposely provided. Further, in the case where the waterproof property becomes a problem, water-absorbing press-winding tape may be used at the opening portion to thereby be useful in preventing the connection workability from lowering.

The residual strain of the optical fibers after formed into a cable was selected to be not higher than 0.02 % taking the long-time reliability of the optical fibers into consideration, and in each step in a cable manufacturing process, the tension of each of the members such as the circular rod-like member, the tape type optical unit, the multifiber optical unit, the tension force body, etc. was selectively adjusted.

The embodiment of the optical cable shown Fig. 1 becomes a super-multifiber high-density optical cable having an outer diameter of 47.2 mm, 4032 coated optical fibers, and optical-fiber packing density of about 2.3 coated optical fibers per mm².

In this cable, good characteristic was confirmed with no increase of losses recognized within a measurement error in each step of manufacturing process at a communication-used wavelength λ = 1.31 µm. Respective manufacturing steps was never recognized in a measured error.

As described above, the optical cable according to the present invention is superior in the multifiber high-density property, in optical-fiber taking-out property and in connection workability. In the optical cable, the influence of side pressure onto the optical fibers could be reduced.

Accordingly, it is possible to use even optical fibers which are apt to cause a comparative loss increase by side pressure, so that a relatively inexpensive optical cable can be provided. The optical cable is effectively used particularly for a multifiber optical cable such as a subscriber optical cable or the like.

While the the present invention has been described above with respect to preferred embodiments thereof, it should of course be understood that the present invention should not be limited only to these embodiments but various changes or modifications may be made without departure from the scope of the invention as defined by the appended claims.

## Claims

1. An optical cable comprising at least one multifiber optical unit, said multifiber optical unit comprising a rodlike member (2) having a diameter D and a groove of substantially rectangular shape formed therein which spirals around the longitudinal axis of said rodlike member and a lamination body of height accomodated in said groove, said lamination body comprising at least one tape-type optical unit (1) constituted by a plurality of optical fibers arranged in at least one row which is coated collectively,
**characterized in that**
the depth of said groove is larger than half of the diameter D of said rod-like member (2);
the distance (x) between the center of said rod-like member (2) and the bottom of said groove is equal to or larger than a half of the height H of said lamination body (1), and
the center of the lamination body substantially is in coincidence with the center of said rod-like member (2).

2. An optical cable according to claim 1, wherein said multifiber optical units are twisted in one direction or twisted in a condition so as to be reversed alternately in opposite directions.

3. An optical cable according to claim 1, wherein strength members (4) are provided on an outside portion of each of said multifiber optical units.

## Patentansprüche

1. Ein optisches Kabel mit wenigstens einer optischen Einheit mit mehreren Fasern, wobei die optische Einheit mit mehreren Fasern ein stabförmiges Element (2) umfaßt mit einem Durchmesser D und einer Furche von im wesentlichen rechteckiger Form, die darin ausgebildet ist und spiralförmig entlang der Längsachse des stabförmigen Elements verläuft, und mit einem Laminatkörper der Höhe H, der in der Furche aufgenommen ist, wobei der Laminatkörper wenigstens eine bandartige optische Einheit (1) umfaßt, die durch eine Vielzahl von in wenigstens einer Reihe angeordneten optischen Fasern, welche gemeinsam beschichtet ist, aufgebaut ist,
**dadurch gekennzeichnet**, daß
die Tiefe der Furche größer ist als die Hälfte des Durchmessers D des stabförmigen Elements (2);
die Entfernung (x) zwischen der Mitte des stabförmigen Elements (2) und dem Boden der Furche gleich ist oder größer als eine Hälfte der Höhe H des Laminatkörpers (1), und
die Mitte eines Laminatkörpers im wesentlichen mit der Mitte des stabförmigen Elements (2) zusammenfällt.

2. Ein optisches Kabel gemäß Anspruch 1, wobei die optischen Einheiten mit mehreren Fasern in einer Richtung verdreht sind oder in einem derartigen Zustand verdreht sind, daß sie abwechselnd in entgegengesetzten Richtungen umgekehrt werden.

3. Ein optisches Kabel gemäß Anspruch 1, wobei Verstärkungselemente (4) an einem Außenseitenbereich jeder optischen Einheit mit mehreren Fasern vorgesehen sind.

## Revendications

1. Câble optique comprenant au moins une unité optique multifibre, l'unité optique multifibre comprenant un organe (2) en forme de barreau de diamètre D ayant une gorge de forme pratiquement rectangulaire réalisée dans cet organe sous forme spiralée autour de l'axe longitudinal de cet organe en forme de barreau, et un corps stratifié de hauteurH telle qu'il est logé dans la gorge, le corps stratifié comprenant au moins une unité optique (1) du type à bande constituée par plusieurs fibres optiques disposées en une rangée au moins et qui sont revêtues collectivement,
caractérisé en ce que :
la profondeur de la gorge est supérieure à la moitié du diamètre D de l'organe (2) en forme de barreau,
la distance (x) entre le centre de l'organe (2) en forme de barreau et le fond de la gorge est égale ou supérieure à la moitié de la hauteur H du corps stratifié (1), et
le centre du corps stratifié coïncide pratiquement avec le centre de l'organe (2) en forme de barreau.

2. Câble optique selon la revendication 1, dans lequel les unités optiques multifibres sont retordues dans un sens ou retordues afin qu'elles s'inversent en sens opposés en alternance.

3. Câble optique selon la revendication 1, dans lequel des organes mécaniquement résistants (4) sont placés sur une partie externe de chacune des unités optiques multifibres.
